# EUROPÄISCHE PATENTSCHRIFT

(11) **EP 2 801 676 B1**
(45) Veröffentlichungstag und Bekanntmachung des Hinweises auf die Patenterteilung: **25.01.2023**
(21) Anmeldenummer: 14166087.8
(22) Anmeldetag: 25.04.2014
(51) Int. Cl.: E04B 1/80

(54) **WÄRMEDÄMMPLATTE UND VERFAHREN ZUR MONTAGE VON LEITUNGEN**
HEAT INSULATING PANEL AND METHOD FOR MOUNTING CONDUITS
PANNEAU D'ISOLATION THERMIQUE ET PROCÉDÉ DE MONTAGE DE CONDUITES

(30) Priorität: 06.05.2013 DE 102013208284
(43) Veröffentlichungstag der Anmeldung: 12.11.2014
(73) Patentinhaber: Fraunhofer-Gesellschaft zur Förderung der angewandten Forschung e.V., 80686 München (DE)
(72) Erfinder: Dinkel, Arnulf, 79100 Freiburg (DE); Coydon, Fabien, 79100 Freiburg (DE); Kagerer, Florian, 79104 Freiburg (DE)
(74) Vertreter: Friese Goeden Patentanwälte PartGmbB

(56) Entgegenhaltungen:
- DE-U1- 29 604 148
- JP-A- H02 272 147
- JP-A- 2005 049 023
- JP-B2- 2 781 001
- US-A1- 2012 267 067

## Beschreibung

Die Erfindung betrifft eine Wärmedämmplatte mit einer Vorderseite und einer Rückseite, wobei auf der Vorderseite zumindest eine erste Ausnehmung ausgeformt ist, in welche eine Leitung mit einem ersten Querschnitt aufnehmbar ist. Weiterhin betrifft die Erfindung ein Verfahren zur Montage von Leitungen, bei welchem zumindest eine Wärmedämmplatte mit ihrer Rückseite auf einer Begrenzungsfläche befestigt wird, wobei auf der Vorderseite der Wärmedämmplatte zumindest eine erste Ausnehmung ausgeformt ist, in welcher eine Leitung mit einem ersten Querschnitt aufnehmbar ist. Wärmedämmplatten und Verfahren der Eingangs genannten Art können eingesetzt werden, um die thermischen Eigenschaften der Gebäudehülle zu optimieren und gleichzeitig Elemente der Haustechnik zu integrieren.

Eine Wärmedämmplatte und ein Verfahren der eingangs genannten Art ist aus dem Jahresbericht 2011 des Fraunhofer-Instituts für Solare Energiesysteme bekannt. Diese bekannte Wärmedämmplatte weist Ausnehmungen auf, in welche Lüftungskanäle in Form von Flachkanälen aufgenommen werden können.

Die Ausnehmungen der Wärmedämmplatten weisen dabei einen zum Außenquerschnitt der Flachkanäle komplementären Querschnitt auf, so dass die Ausnehmungen durch die Flachkanäle vollständig ausgefüllt werden. Dies ermöglicht den Aufbau einer multifunktionalen Fassade, welche neben Wetter- und Wärmeschutz weitere Funktionen integriert und dabei bauliche Maßnahmen im Innenraum des Gebäudes reduziert oder vermeidet. Somit können Bestandsgebäude einfach und kostengünstig und mit geringen Beeinträchtigungen der Benutzer mit Zu- und Abluftkanälen zur Sicherstellung eines hygienischen und/oder bauphysikalisch sinnvollen Luftwechsels mit optionaler Wärmerückgewinnung ausgestattet werden.

Diese bekannte Wärmedämmplatte weist jedoch den Nachteil auf, dass Leitungen unterschiedlichen Querschnittes nur sehr aufwändig in die Fassade integriert werden können. Das System weist daher eine geringe Flexibilität auf und verursacht bei komplexen Gebäudesanierungen hohe Kosten.

Aus der DE 296 04 148 U1 ist eine Wandflächenheizung bekannt, bei welcher eine Isolationsschicht auf einer Wand montiert wird. Auf die Isolationsschicht wird ein Wärmespeicher montiert, beispielsweise aus Ton. Dieser wird mit einer Tragschicht versehen, welche ein Rohrregister zur Zufuhr von Wärmeenergie trägt.

Die US 2012/0267067 A1 offenbart eine Platte umfassend ein Isoliermaterial mit ersten Kanäle, die in einer ersten Oberfläche des Isoliermaterials angeordnet sind, und zweite Kanäle, die in der ersten Oberfläche des Isoliermaterials angeordnet sind. Die zweiten Kanäle sind in einem ersten Winkel relativ zu den ersten Kanälen angeordnet. Außerdem sind die ersten Kanäle und zweiten Kanäle so angeordnet, dass jeder der ersten Kanäle im Wesentlichen parallel zu den anderen ersten Kanälen ist und jeder der zweiten Kanäle im Wesentlichen parallel zu den anderen zweiten Kanälen ist. Die Platte umfasst ferner eine erste Halteklammer, die in einem der ersten Kanäle angeordnet ist. Die erste Halteklammer ist so konfiguriert, dass sie einen Gegenstand mit einem im Wesentlichen runden Querschnitt in einem der ersten Kanäle befestigen kann.

Ausgehend von diesem Stand der Technik liegt der Erfindung somit die Aufgabe zugrunde, eine Wärmedämmplatte bereitzustellen, mit welcher multifunktionale Fassaden rasch und einfach erstellt werden können.

Die Aufgabe wird erfindungsgemäß durch eine Wärmedämmplatte gemäß Anspruch 1, ein Verfahren gemäß Anspruch 9, ein Gebäude oder Fahr- oder Flugzeug gemäß Anspruch 14 und einen Satz von Teilen gemäß Anspruch 15 gelöst. Weitere vorteilhafte Ausgestaltungen der Erfindung finden sich in den Unteransprüchen.

Erfindungsgemäß wird eine Wärmedämmplatte mit einer Vorderseite und einer Rückseite vorgeschlagen. Die Wärmedämmplatte kann in an sich bekannter Weise aus Materialien hergestellt sein, welche einen vergleichweise großen Wärmedurchgangswiderstand aufweisen. Beispielsweise kann die Wärmedämmplatte aus einem Hartschaum aus einem Polymer, einem Blähglas, einem Schaumglas, einem Porenbeton, einer Mineralwolle oder ähnlichen, an sich bekannten Materialien gefertigt sein.

Die Wärmedämmplatte kann in einigen Ausführungsformen der Erfindung eine Breite von etwa 20 cm bis etwa 300 cm und eine Höhe von etwa 20 cm bis etwa 300 cm aufweisen. Dies sichert einerseits eine rationelle Verarbeitung und andererseits eine einfache Transportierbarkeit zum Montageort. In einigen Ausführungsformen der Erfindung kann die Wärmedämmplatte eine Größe aufweisen, welche von einem einzelnen Arbeiter handhabbar ist. In einigen Ausführungsformen der Erfindung kann die Wärmedämmplatte eine Größe aufweisen, welche der Plattengröße bekannter Wärmedämmverbundsysteme entspricht. Dies erlaubt die Kombinierbarkeit der erfindungsgemäßen Wärmedämmplatte mit bereits bekannten Wärmedämmplatten.

Weiterhin kann die Wärmedämmplatte in einigen Ausführungsformen der Erfindung eine Dicke von etwa 2 cm bis etwa 30 cm aufweisen. In anderen Ausführungsformen der Erfindung kann die Dicke der Wärmedämmplatte zwischen etwa 10 cm und etwa 25 cm betragen. Dies erlaubt eine hinreichend gute Wärmedämmung eines klimatisierten und/oder beheizten Innenraums, so dass keine großen Energieverluste über die Fassade bzw. die Begrenzungsflächen des Innenraums zur erleiden. Die Wärmedämmplatte kann eine zusammenhängende Fläche mit einer Mindestdicke aufweisen, um die Grundstabilität zu gewährleisten. Die Gesamtdicke der Wärmedämmplatte und der Abdeckplatte richtet sich nach den jeweiligen Erfordernissen der Wärmedämmung und der Überdeckung der Leitungen mit Dämmmaterial.

Die Wärmedämmplatte weist eine Vorderseite und eine Rückseite auf. Die Rückseite ist dazu vorgesehen, an einer Begrenzungswand eines Innenraums anzuliegen. In einigen Ausführungsformen der Erfindung kann die Wärmedämmplatte an der Außenseite der Begrenzungswand montiert werden. Die Vorderseite grenzt nach der Montage der Wärmedämmplatte an den an die Wand anschließenden Halbraum an. Die Montage der Wärmedämmplatte an der entsprechenden Wand kann in einigen Ausführungsformen der Erfindung durch Verklebung erfolgen. In anderen Ausführungsformen der Erfindung kann die Montage durch mechanische Befestigungen erfolgen, beispielsweise Dübel oder durch Aufnahmeschienen, in welchen eine Wärmedämmplatte eingeführt werden kann. Die Aufnahmeschienen können neben den Wärmedämmplatten weitere Fassadenelemente aufnehmen, beispielsweise eine Fassadenverkleidung aus Kunststoff, Glas oder Stein.

Der von der Begrenzungswand zumindest teilweise umschlossene Innenraum kann ein Raum sein, dessen Funktion eine thermische Trennung unterschiedlich temperierter Umgebungen beinhaltet. In einigen Ausführungsformen der Erfindung kann der Innenraum ein Wohnraum oder ein Büro oder ein anderer Raum eines Bauwerkes sein. In anderen Ausführungsformen der Erfindung kann der Innenraum Teil eines Fahr- oder Flugzeuges oder eines Bootes sein, beispielsweise eines Eisenbahnwagons, eines Passagierflugzeuges oder eines Wohnmobils. In einigen Ausführungsformen der Erfindung kann der Innenraum Teil eines Containers sein, insbesondere Teil eines Kühlcontainers zum Transport von Frischwaren.

Die Rückseite der Wärmedämmplatte kann eine zur Wand komplementäre Form aufweisen. Für die Anwendung im Bauwesen sind ebene Wände die gebräuchlichste Konstruktion, so dass die Rückseite der Wärmedämmplatte ebenfalls eben ausgeführt sein kann. Dies erlaubt eine vollflächige Montage der Wärmedämmplatte, so dass sich gute Haltekräfte der Wärmedämmplatte ergeben und kein Luftvolumen zwischen der Wärmedämmplatte und der Wand eingeschlossen ist, welches zum Ausfall von Feuchtigkeit und nachfolgend zur Schimmelbildung führen kann. Sofern ein Gebäude mit konkav oder konvex gekrümmten Außenwänden versehen ist, kann auch die Wärmedämmplatte eine entsprechende konkave oder konvexe Rückseite aufweisen, so dass eine vollflächige Verklebung der Wärmedämmplatte auf der Wand ermöglicht wird. In einigen Ausführungsformen der Erfindung kann die Wärmedämmplatte zur thermischen Dämmung des Innenraums eines Fahr- oder Flugzeugs eingesetzt werden. In diesem Fall kann die Rückseite der Wärmedämmplatte als komplexe Freiformfläche gestaltet sein oder eine Krümmung aufweisen, beispielsweise in Form einer Klothoide oder eines Kreisbogens, um ein formschlüssiges Anliegen der Wärmedämmplatte an der Außenwand des Fahr- oder Flugzeugs zu ermöglichen. Die Wärmedämmplatte kann auf der Außenseite einer Begrenzungswand angeordnet sein, um eine Außendämmung zu bilden oder an der Innenwand, der Decke oder dem Boden von Innenräumen um eine Innendämmung des entsprechenden Raumes zu bilden.

Erfindungsgemäß wird vorgeschlagen, auf der Vorderseite zumindest eine erste Ausnehmung auszuformen, welche einen ersten Querschnitt aufweist. In die erste Ausnehmung kann eine Leitung aufgenommen werden, welche einen ersten Querschnitt aufweist, welcher komplementär zum Querschnitt der ersten Ausnehmung ausgebildet ist. Somit kann die Leitung die Ausnehmung nahezu vollständig ausfüllen. Dies ermöglicht, die Leitung durch Formschluss oder Klemmung in der Wärmedämmplatte aufzunehmen, was eine einfache Montage der Leitung ohne weitere Befestigungsmittel ermöglicht.

Bei einer formschlüssigen Verbindung im Sinne der vorliegenden Erfindung liegen die Verbindungspartner an zumindest zwei gegenüberliegenden Flächen an, so dass bei Betriebsbelastung Druckkräfte normal, d.h. in etwa rechtwinklig, auf die Verbindungspartner einwirken.

Erfindungsgemäß wird nun vorgeschlagen, zumindest ein erstes Füllelement vorzusehen, welches in der ersten Ausnehmung befestigt ist und in welchem eine zweite Ausnehmung ausgeformt ist. Das erste Füllelement kann in einigen Ausführungsformen einen äußeren Querschnitt aufweisen, welcher in etwa dem ersten Querschnitt der ersten Leitung entspricht. Weiterhin weist das erste Füllelement zumindest eine zweite Ausnehmung auf, deren Querschnittsfläche geringer ist als die Querschnittsfläche der ersten Ausnehmung. In diese zweite Ausnehmung kann eine zweite Leitung mit einem zweiten Querschnitt aufgenommen werden. Auch der Querschnitt der zweiten Ausnehmung kann in etwa komplementär zum Querschnitt der zweiten Leitung ausgestaltet sein, so dass die zweite Leitung durch Reibungskräfte oder durch Formschluss in der zweiten Ausnehmung festlegbar ist. Somit kann auch die zweite Leitung durch einfaches Eindrücken werkzeuglos und ohne Verwendung von Klebstoff befestigt werden.

Gemäß der Erfindung sind die ersten Ausnehmungen der Wärmedämmplatte bereits bei deren Herstellung zumindest teilweise mit ersten Füllelementen versehen. Dies kann den Bauablauf bei der Endmontage weiter beschleunigen, wenn nur ein Teil der ersten Füllelemente entfernt werden muss, um erste Leitungen mit dem ersten Querschnitt aufzunehmen. Die verbleibende Teile der Wärmedämmplatte sind unmittelbar für die Montage der zweiten Leitungen mit geringerem Querschnitt vorbereitet. In einigen Ausführungsformen der Erfindung können die zweiten Ausnehmungen der Wärmedämmplatte bereits bei deren Herstellung zumindest teilweise mit zweiten Füllelementen versehen sein. Dies kann den Bauablauf bei der Endmontage weiter beschleunigen, wenn nur ein Teil der zweiten Füllelemente entfernt werden muss, um zweite Leitungen mit dem zweiten Querschnitt aufzunehmen. Die verbleibende Teile der Wärmedämmplatte sind unmittelbar für die Montage der dritten Leitungen mit geringerem Querschnitt vorbereitet. In einigen Ausführungsformen der Erfindung können die dritten Ausnehmungen der Wärmedämmplatte bereits bei deren Herstellung zumindest teilweise mit dritten Füllelementen ohne weitere Ausnehmung versehen sein. Dies kann den Bauablauf bei der Endmontage weiter beschleunigen, wenn nur ein Teil der dritten Füllelemente entfernt werden muss, um dritte Leitungen mit dem dritten Querschnitt aufzunehmen.

Die verbleibende Teile der Wärmedämmplatte sind unmittelbar für die nachfolgenden Putz- und Anstricharbeiten vorbereitet.

Erfindungsgemäß werden die ersten und zweiten Füllelemente bei der Herstellung der Wärmedämmplatte aus dem Material der Wärmedämmplatte erzeugt, indem die erste bzw. zweite Ausnehmung mit zumindest einem Schnitt in den Querschnitt der Wärmedämmplatte eingebracht wird, welcher so geführt wird, dass das Füllelement über zumindest einen Steg mit dem umgebenden Material verbunden bleibt. Dadurch wird vermieden, dass die Füllelemente beim Transport oder der Lagerung der Wärmedämmplatten aus der Ausnehmung herausfallen kann. Um ein Füllelement bei der Montage der Wärmedämmplatte zu entfernen, ist der Steg als Sollbruchstelle ausgebildet, so dass der Steg beim herausnehmen des Füllelementes bricht.

In einigen Ausführungsformen der Erfindung kann eine Farbmarkierung an der Oberfläche der Wärmedämmplatte angebracht sein, welche die Lage der Sollbruchstellen oder die Schnittführung kennzeichnet, so dass das Heraustrennen eines Füllelementes leichter und zuverlässiger durchgeführt werden kann.

In einem Ausführungsbeispiel der Erfindung kann die Wärmedämmplatte dazu verwendet werden, eine Fassade energetisch zu sanieren. In diesem Fall werden in einem ersten Verfahrensschritt die Wärmedämmplatten auf der Außenseite der Fassade befestigt, beispielsweise durch Verkleben oder durch entsprechende Dübel und eine Verschraubung. Im darauffolgenden dritten Verfahrensschritt können, nachdem erste Füllelemente aus den ersten Ausnehmungen entfernt worden sind, Lüftungskanäle mit vergleichsweise großem Querschnitt und/oder Abwasserrohre in die ersten Ausnehmungen eingedrückt werden, so dass neben der energetischen Sanierung auch eine Optimierung der Hausinstallation auf einen modernen Standard ermöglicht wird, ohne Bauarbeiten in den Innenräumen durchzuführen. Im nächsten Verfahrensschritt können in die zweiten Ausnehmungen der Füllelemente weitere Rohrleitungen eingesetzt werden, beispielsweise Leerrohre für eine Elektroinstallation, Gasleitungen oder Wasserrohre zur Trink- oder Brauchwasserversorgung oder für ein Wärmeträgermedium, beispielsweise ein Kühl- oder Heizwasser. Auch die zweiten Leitungen können durch einfaches Eindrücken in die zweite Ausnehmung werkzeuglos und klebstofffrei montiert werden, so dass ein geringer Montageaufwand und dadurch ein rascher Baufortschritt ermöglicht wird. In gleicher Weise kann die erfindungsgemäße Wärmedämmplatte auch bei der Herstellung eines Fahr- oder Flugzeugs am Fließband eingesetzt werden, so dass das Fahr- oder Flugzeug in effizienter Weise mit einer Wärmedämmung ausgestattet werden kann, welche gleichzeitig die Basis für die Ausstattung mit Lüftungs- und Klimatechnik, Elektroleitungen oder Wasserleitungen bildet.

In einigen Ausführungsformen der Erfindung betrifft diese eine Wärmedämmplatte mit einer Vorderseite und einer Rückseite, wobei auf der Vorderseite zumindest eine erste Ausnehmung ausgeformt ist, in welche eine erste Leitung mit einem ersten Querschnitt aufgenommen ist, weiterhin enthaltend eine Abdeckplatte, welche auf der Vorderseite der Wärmedämmplatte angeordnet ist, so dass die erste Leitung und die zweite Leitung in zumindest einem Längsabschnitt vollständig in Dämmmaterial eingebettet ist.

In einigen Ausführungsformen der Erfindung steht die Leitung nicht über die durch die Vorderseite der Wärmedämmplatte definierte Ebene über. Dies erleichtert das Aufbringen eines Außenputzes oder einer dekorativen Deckschicht, da die Außenseite unabhängig vom Vorhandensein einer Leitung eben ist.

In einigen Ausführungsformen der Erfindung kann die Wärmedämmplatte zumindest ein zweites Füllelement enthalten, welches in die zweite Ausnehmung einsetzbar ist und in welchem eine dritte Ausnehmung ausgeformt ist, in welcher eine dritte Leitung mit einem dritten Querschnitt aufnehmbar ist. Ein solchermaßen ausgestaltetes zweites Füllelement gestattet es, den Querschnitt der zweiten Ausnehmung weiter zu verringern, so dass dritte Leitungen mit noch geringerem dritten Querschnitt ebenfalls werkzeuglos und damit besonders einfach durch Eindrücken in die Ausnehmungen montiert werden können. Beispiele für solche dritte Leitungen können beispielsweise Elektroleitungen sein, welche einen geringeren Querschnitt aufweisen als Wasserleitungen oder Leerrohre, welche wiederum einen geringeren Querschnitt aufweisen als Abwasserleitungen oder Lüftungsleitungen. Selbstverständlich sind die genannten Leitungen nur beispielhaft zu sehen und können in anderen Ausführungsformen der Erfindung andere Funktionen erfüllen.

In einigen Ausführungsformen der Erfindung kann die Wärmedämmplatte zumindest ein erstes Füllelement aufweisen, welches mit einer Mehrzahl von zweiten Ausnehmungen versehen ist, in welche eine Mehrzahl von dritten Füllelementen oder eine Mehrzahl von Leitungen aufnehmbar sind. In einigen Ausführungsformen der Erfindung kann die Wärmedämmplatte zumindest ein zweites Füllelement aufweisen, welches mit einer Mehrzahl von dritten Ausnehmungen versehen ist, in welche eine Mehrzahl von Leitungen aufnehmbar sind. Dadurch können mehrere Leitungen aufgenommen werden, so dass der zur Verfügung stehende Platz besonders effizient genutzt werden kann.

In einigen Ausführungsformen der Erfindung kann die Wärmedämmplatte dritte Füllelemente enthalten, welche in die erste, zweite oder dritte Ausnehmung einsetzbar sind und selbst keine weitere Ausnehmung enthalten. Die dritten Füllelemente füllen somit den Querschnitt der ersten, zweiten oder dritten Ausnehmung vollständig auf, so dass an den Stellen, welche keine Leitungen aufnehmen, eine besonders gute Wärmedämmung ohne Kältebrücken erzielt werden kann.

In einigen Ausführungsformen der Erfindung kann die Wärmedämmplatte nach Montage an ihrem Bestimmungsort und nach Einsetzen der gewünschten Leitungen mit einer Abdeckplatte auf der Vorderseite abgeschlossen werden. Dadurch kann eine glatte und ebene Außenseite bereitgestellt werden, welche leicht mit einem dekorativen Anstrich oder einem Putz versehen werden kann. In einigen Ausführungsformen der Erfindung kann die dem Betrachter zugewandte Seite der Abdeckplatte unmittelbar dekorativ gestaltet sein, so dass sich eine weitere Nachbearbeitung erübrigt. Weiterhin kann die Abdeckplatte die Wärmedämmung, den Schutz vor Feuchtigkeit und Niederschlag oder den Schutz vor mechanischer Beschädigung der Leitungen weiter verbessern, beispielsweise indem die Abdeckplatte mit einer Deckschicht aus widerstandsfähigem Material belegt ist. Die Abdeckplatte kann eine Dicke zwischen etwa 2 cm und etwa 30 cm oder zwischen etwa 10 cm und etwa 20 cm aufweisen, und so auch die in der Wärmedämmplatte verlegten Leitungen vor Frost schützen. Die Abdeckplatte kann aus einem Hartschaum oder aus Mineralwolle oder als Vakuumpaneel ausgeführt sein. Die Abdeckplatte und die Wärmedämmplatte können zusammen die Gesamtdicke der Wärmedämmung bilden.

In einigen Ausführungsformen der Erfindung kann das Anbringen der Abdeckplatte auf der Vorderseite der Wärmedämmplatte durch Verklebung oder Kaltverschweißung erfolgen. Dies ermöglicht eine einfache Verarbeitung mit nur zwei Arbeitsgängen. In einigen Ausführungsformen der Erfindung kann das Anbringen der Abdeckplatte auf der Vorderseite der Wärmedämmplatte durch Eindrücken von entsprechenden Vorsprüngen der Abdeckplatte in zugeordnete Ausnehmungen der Wärmedämmplatte erfolgen. Dies ermöglicht eine einfache werkzeuglose Montage.

In einigen Ausführungsformen der Erfindung betrifft diese einen Satz von Teilen, aus denen sich eine multifunktionelle Fassade zusammenbauen lässt. Der Satz von Teilen enthält erfindungsgemäße Wärmedämmplatten in unterschiedlichen Größen und/oder mit einer unterschiedlichen Anzahl von ersten Ausnehmungen. Der Satz Teile enthält erste Füllelemente, welche in den ersten Ausnehmungen befestigt sind und eine unterschiedliche Anzahl und/ oder eine unterschiedliche Form und/oder eine unterschiedliche Anordnung von zweiten Ausnehmungen aufweisen. Der Satz Teile kann erste und zweite Leitungen enthalten, welche einen unterschiedlichen Querschnitt und/oder eine unterschiedliche Funktion aufweisen, so dass diese in die ersten oder zweiten Ausnehmungen einführbar sind und beispielsweise als Wasserleitungen, als Leerrohr, als Gasleitung, als Lüftungsleitung, als Abwasserleitung, als Elektroleitung oder als Daten- oder STromkabel verwendbar sind. Der Satz Teile kann erste und zweite Abdeckplatten enthalten, welche sich beispielsweise im verwendeten Material, in der Dicke oder im Wärmedurchgangswiderstand unterscheiden.

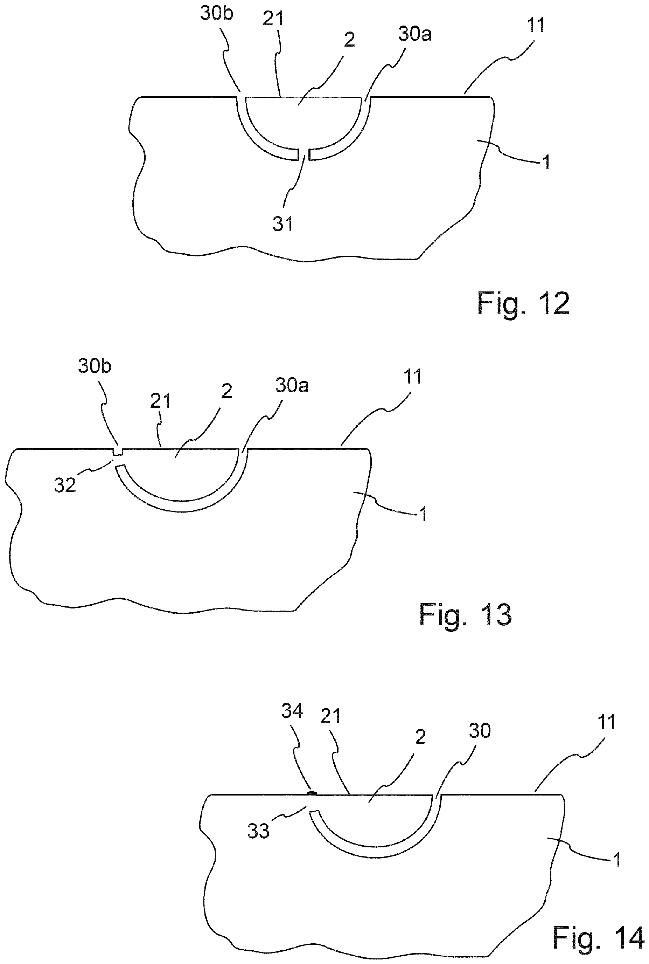

Nachfolgend soll die Erfindung anhand von Figuren ohne Beschränkung des allgemeinen Erfindungsgedankens näher erläutert werden. Dabei zeigen lediglich die Fig. 12, 13 und 14 erfindungsgemäße Ausführungsformen der Wärmedämmplatte, wobei jedoch in diesen Figuren die erfindungsgemäße, in dem ersten Füllelement ausgeformte zweite Ausnehmung nicht dargestellt ist.
Fig. 1 eine perspektivische Darstellung einer ersten Ausführungsform einer Wärmedämmplatte.
Fig. 2 zeigt ein erstes Ausführungsbeispiel eines ersten Füllelements.
Fig. 3 zeigt ein zweites Ausführungsbeispiel eines ersten Füllelements.
Fig. 4 zeigt eine Wärmedämmplatte gemäß der ersten Ausführungsform, welche mit ersten Füllelementen ausgestattet ist.
Fig. 5 erläutert den zweiten Verfahrensschritt bei der Montage der Wärmedämmplatte.
Fig. 6 erläutert den zweiten Verfahrensschritt bei der Montage der Wärmedämmplatte.
Fig. 7 erläutert den dritten Verfahrensschritt bei der Montage der Wärmedämmplatte.
Fig. 8 erläutert den vierten Verfahrensschritt bei der Montage der Wärmedämmplatte.
Fig. 9 zeigt den Querschnitt durch eine zweite Ausführungsform einer Wärmedämmplatte, eine dritte Ausführungsform eines ersten Füllelementes und eine Ausführungsform eines zweiten Füllelementes.
Fig. 10 zeigt den Querschnitt durch eine zweite Ausführungsform einer Wärmedämmplatte, welche mit ersten und zweiten Füllelementen ausgestattet ist
Fig. 11 zeigt eine Wärmedämmplatte gemäß der zweiten Ausführungsform, welche mit ersten und zweiten Füllelementen ausgestattet ist.
Fig. 12 zeigt den Querschnitt durch eine erfindungsgemäße Wärmedämmplatte, welche mit ersten Füllelementen ausgestattet ist.
Fig. 13 zeigt den Querschnitt durch eine Wärmedämmplatte gemäß einer weiteren erfindungsgemäßen Ausführungsform, welche mit ersten Füllelementen ausgestattet ist.
Fig. 14 zeigt den Querschnitt durch eine Wärmedämmplatte gemäß einer weiteren erfindungsgemäßen Ausführungsform, welche mit ersten Füllelementen ausgestattet ist.

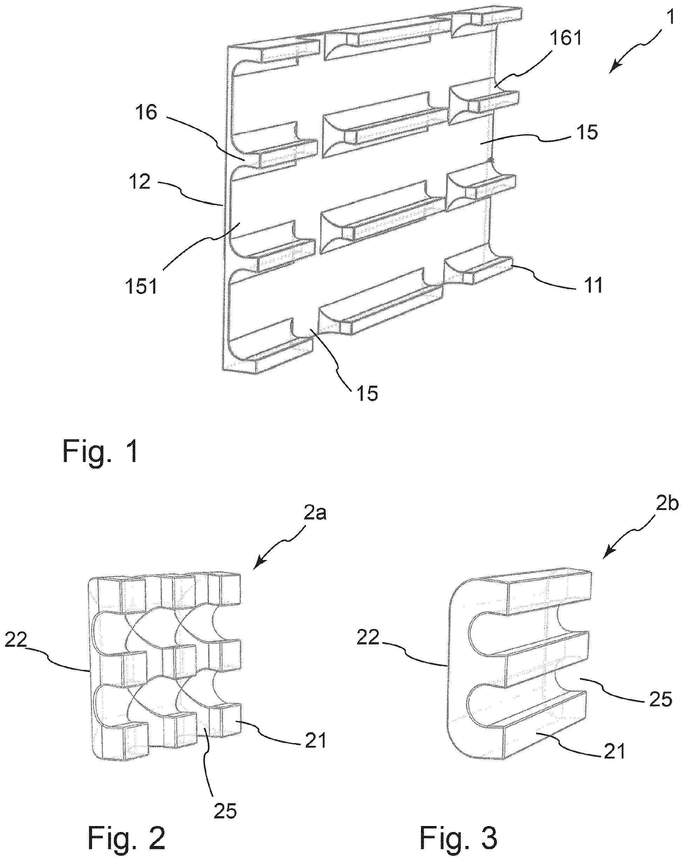

Fig. 1 zeigt ein Ausführungsbeispiel einer nicht erfindungsgemäßen Ausführungsform einer Wärmedämmplatte 1.

Die Wärmedämmplatte 1 weist eine Vorderseite 11 und eine Rückseite 12 auf. Die Rückseite 12 ist zur Montage auf der Begrenzungswand eines zu isolierenden Raums vorgesehen. Beispielsweise kann die Rückseite 12 der Wärmedämmplatte 1 auf der Außenseite einer Fassade befestigt werden. In anderen Ausführungsformen der Erfindung kann die Rückseite 12 an der Innenwand oder einer Teilfläche einer Innenwand eines Gebäudes angeordnet werden. In wiederum einer anderen Ausführungsform der Erfindung kann die Rückseite 12 an der Decke eines Raumes angeordnet werden, so dass die Wärmedämmplatte 1 als Deckenpaneel Verwendung finden kann. Schließlich kann die Rückseite 12 der Wärmedämmplatte 1 auf dem Boden eines Gebäudes angeordnet sein, so dass die Wärmedämmplatte 1 eine Wärme- und/oder Trittschalldämmung bildet. Schließlich kann die Wärmedämmplatte 1 in einem Fahr- oder Flugzeug verwendet werden. In diesem Fall die Form der Wärmedämmplatte 1 von einer rechteckigen Grundfläche abweichen und die Rückseite 12 kann als nicht-ebene Fläche ausgeführt sein, so dass die Wärmedämmplatte 1 komplementär zur Begrenzungswand des Raumes geformt ist.

An der Vorderseite 11 ist eine Mehrzahl von ersten Ausnehmungen 15 angeordnet. Beispielhaft ist eine Wärmedämmplatte 1 mit drei ersten Ausnehmungen 15 gezeigt. In anderen Ausführungsformen der Erfindung kann die Anzahl der Ausnehmungen 15 größer oder geringer sein und beispielsweise zwischen 1 und etwa 25 betragen. Im dargestellten Ausführungsbeispiel weisen die Ausnehmungen 15 eine im Wesentlichen ebene Grundfläche 151 auf. Weiterhin sind die Ausnehmungen 15 durch Stege 16 begrenzt. Jeder Steg weist an der der Ausnehmung 15 zugewandten Seite eine konkave Innenfläche 161 auf. Hierdurch kann eine in Fig. 1 nicht dargestellte erste Leitung mit einem zur Ausnehmung komplementären Querschnitt so in die Ausnehmung 15 eingesetzt werden, dass diese mit einem konvexen Abschnitt ihrer Begrenzungswand formschlüssig in der Ausnehmung 15 aufgenommen ist. Die Stege 16 können wie die gesamte Wärmedämmplatte 1 aus einem elastischen Material geformt sein, so dass die Stege 16 beim Einführen der Leitung verformt werden und die Leitung nach dem Einführen durch Klemmkräfte in ihrer gewünschten Position gehalten wird.

Weiterhin zeigt Fig. 1 optionale Lücken 17. Die Lücken 17 unterbrechen die Stege 16 an vorgebbaren Stellen, so dass die Leitungen nicht nur entlang der Ausnehmungen 15 sondern auch in einer dazu orthogonalen Richtung verlegt werden können. In anderen Ausführungsformen der Erfindung können Lücken 17 auch so angeordnet sein, dass Leitungen in einem anderen Winkel zur Längserstreckung der Ausnehmungen 15 verlegt werden können, beispielsweise etwa 45°.

Die Wärmedämmplatte 1 kann Abmessungen aufweisen, welche den einfachen Transport durch eine Person ermöglichen. Beispielsweise kann die Wärmedämmplatte 1 eine Breite von etwa 1 m bis 2,5 m aufweisen und eine Höhe von etwa 0,5 m bis etwa 2,5 m. Die Dicke der Wärmedämmplatte 1 kann nach den Erfordernissen der Dämmung ausgewählt sein oder an die Dicke der einzubringenden Leitungen ausgewählt sein und beispielsweise zwischen etwa 10 cm und etwa 30 cm betragen.

Fig. 2 zeigt eine erste Ausführungsform eines ersten Füllelements 2a. Das Füllelement 2a weist eine Rückseite 22 auf, welche bei Montage in einer Ausnehmung 15 einer Wärmedämmplatte 1 auf der Grundfläche 151 der Ausnehmung 15 zu liegen kommt. Die Außenfläche des ersten Füllelements 2a kann darüber hinaus so geformt sein, dass der Querschnitt komplementär zur Querschnittsform und Größe der Ausnehmung 15 ist. Somit kann auch das erste Füllelement 2a in einfacher Weise durch formschlüssiges Einpressen in die Ausnehmungen 15 in diesen dauerhaft befestigt werden. Eine Verwendung von zusätzlichen Klebstoffen ist optional und kann auch entfallen. Hierdurch ergibt sich eine rasche und einfache Montage oder Demontage der ersten Füllelemente 2a und 2b. Weiterhin weist das erste Füllelement eine Vorderseite 21 auf, welche nach der Montage des Füllelements 2a in der ersten Ausnehmung 15 bündig mit der Vorderseite 11 der Wärmedämmplatte 1 abschließen kann.

Das erste Füllelement 2a weist weiterhin zweite Ausnehmungen 25 auf. Beispielhaft ist ein Füllelement 2a mit vier zweiten Ausnehmungen 25 gezeigt, welche paarweise orthogonal zueinander sind, so dass sich die Form eines Doppelkreuzes oder Hash-Zeichens ergibt. In anderen Ausführungsformen der Erfindung kann die Anzahl der Ausnehmungen 25 größer oder geringer sein. Im dargestellten Ausführungsbeispiel weisen die Ausnehmungen 25 einen im Wesentlichen runden Querschnitt auf. Weiterhin sind die Ausnehmungen 25 durch Stege begrenzt. Jeder Steg weist an der der Ausnehmung 25 zugewandten Seite eine konkave Innenfläche auf. Hierdurch kann eine in Fig. 2 nicht dargestellte zweite Leitung mit einem zur Ausnehmung 25 komplementären Querschnitt so in die Ausnehmung 25 eingesetzt werden, dass diese mit einem konvexen Abschnitt ihrer Begrenzungswand formschlüssig in der Ausnehmung 25 aufgenommen ist. Die Stege können wie das gesamte Füllelement 2a aus einem elastischen Material geformt sein, so dass die Stege beim Einführen der Leitung verformt werden und die Leitung nach dem Einführen durch Klemmkräfte in ihrer gewünschten Position gehalten wird.

Fig. 3 zeigt eine zweite Ausführungsform eines Füllelements 2b. Gleiche Teile sind mit gleichen Bezugszeichen versehen, so dass sich die nachfolgende Beschreibung auf die wesentlichen Unterschiede beschränkt. Auch das Füllelement 2b weist eine Form auf, mit welcher es in die Ausnehmungen 15 einer Wärmedämmplatte 1 eingesetzt werden kann. Der wesentliche Unterschied zum Füllelement 2a gemäß Fig. 2 besteht in der Form der Ausnehmung 25. Die zweiten Ausnehmungen 25 gemäß Fig. 3 ist im Wesentlichen geradlinig ausgeführt, so dass eine Rohrleitung bzw. ein Leerrohr für eine Elektroinstallation eingelegt werden kann. Demgegenüber weist das Füllelement 2a gemäß Fig. 2 zweite Ausnehmungen 25 auf, welche kreuzweise zueinander verlaufen. Dies ermöglicht einerseits, Leitungen in die Ausnehmungen einzulegen, welche geradlinig durch das Füllelement hindurch führen. Daneben können in das Füllelement 2a jedoch auch Abzweige oder Kreuzungen eingelegt werden, um eine Rohrleitung in einer orthogonalen Richtung weiterzuführen. Diese orthogonal verlaufenden Leitungen können in den Spalten 17 der Stege 16 durch die Wärmedämmplatte 1 geführt werden.

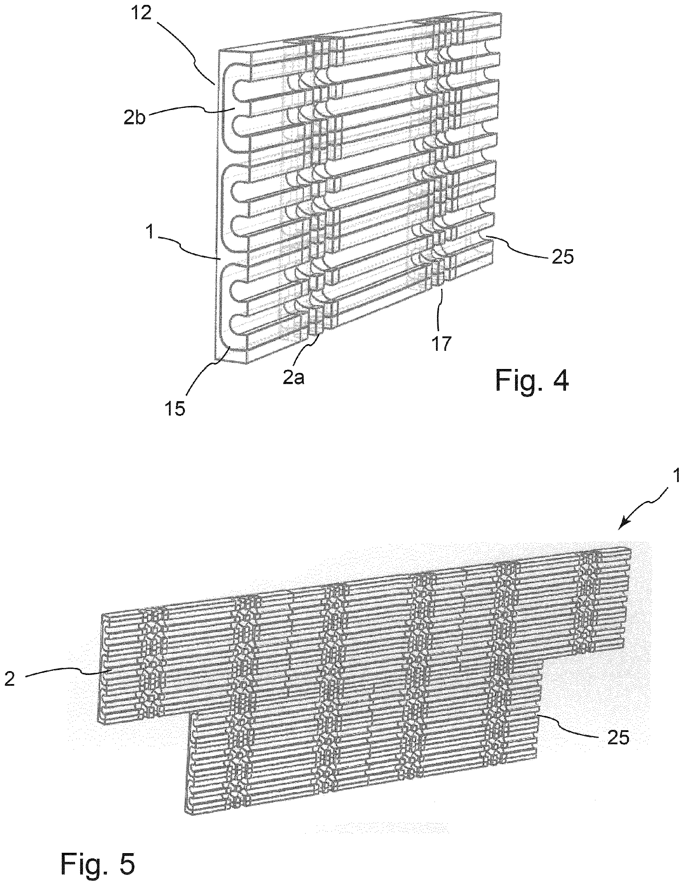

Fig. 4 zeigt nochmals eine Wärmedämmplatte 1, bei welcher Füllelemente 2a und 2b in die erste Ausnehmung 15 eingebracht sind. Sofern die Wärmedämmplatte 1 in der in Fig. 4 gezeigten zum Ort der letzten Verwendung transportiert wird, können dort unmittelbar zweite Leitungen mit einem zweiten Querschnitt in die Ausnehmungen 25 eingelegt werden. Zur Montage von ersten Leitungen mit größerem Querschnitt müssen lediglich einige wenige Füllelemente 2a bzw. 2b aus der Wärmedämmplatte entfernt werden.

Die Fig. 5 bis 8 zeigen nochmals die Montage der Wärmedämmplatten 1. Beispielhaft ist in den Figuren die Montage an einer ebenen Fassade erläutert. In gleicher Weise kann jedoch die Montage auch im Innenraum eines Fahr- oder Flugzeuges oder in den Innenräumen eines Gebäudes erfolgen.

Im ersten Verfahrensschritt wird eine Mehrzahl von Wärmedämmplatten 1 auf der Außenseite der Fassade angeordnet. Im dargestellten Ausführungsbeispiel wurden fünf Wärmedämmplatten 1 durch Klebung auf der Fassade befestigt. Zur Vermeidung von Wärmebrücken sind die Wärmedämmplatten 1 auf Knirsch verlegt, d.h. mit dem geringst möglichen, im Wesentlichen durch Fertigungstoleranzen bedingten Abstand.

Fig. 5 erläutert auch, dass die Wärmedämmplatten 1 bereits im Herstellwerk mit ersten Füllelementen 2 ausgestattet wurden, so dass die ersten Ausnehmungen 15 sämtlich mit Füllelementen versehen sind. In einigen Ausführungsformen der Erfindung können die Spalte 17 so in der Wärmedämmplatte 1 angeordnet sein, dass bei Versetzung der Wärmedämmplatte um eine halbe Plattenbreite die Spalte 17 wieder übereinander zu liegen kommen. Dies erlaubt die Verlegung von Leitungen sowohl in horizontaler als auch in vertikaler Richtung jeweils über die gesamte Breite bzw. Höhe der Fassade.

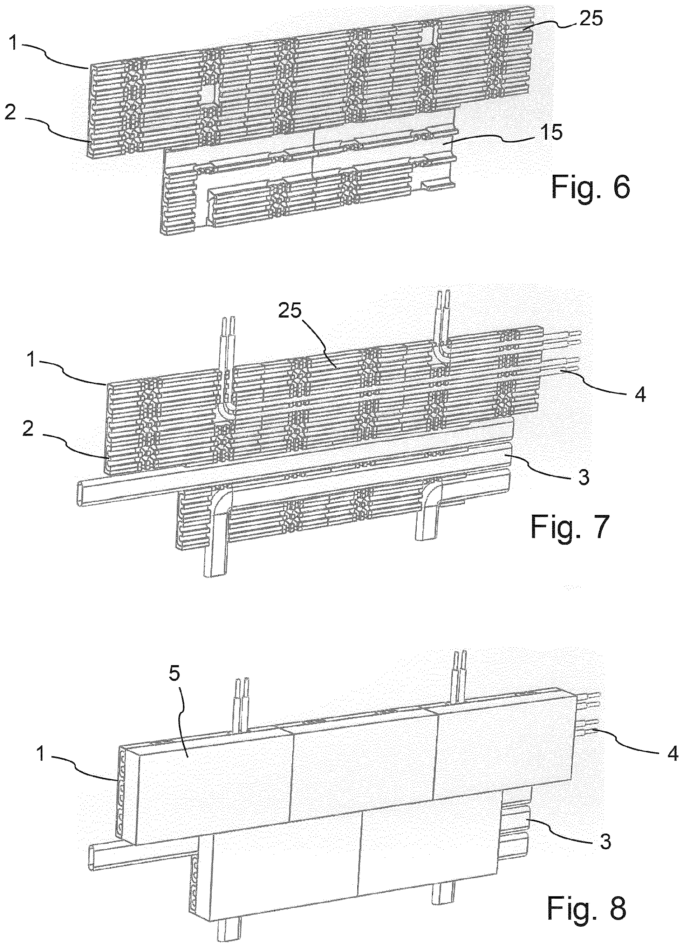

Fig. 6 zeigt den Zustand der Wärmedämmplatte nach Ausführung des zweiten Verfahrensschrittes. Wie in Fig. 6 erkennbar ist, wurden einige der ersten Füllelemente 2a und 2b aus den Wärmedämmplatten entfernt. Dies ermöglicht die Montage von Leitungen mit größerem Querschnitt, beispielsweise Zu- oder Abluftleitungen oder Abwasserleitungen oder Leerrohre zur Installation einer Vielzahl von Elektroleitungen. Sofern nur wenige zweite Leitungen mit geringem Querschnitt auf der Fassade installiert werden sollen, jedoch eine große Anzahl erster Leitungen mit größerem Querschnitt benötigt wird, können die Wärmedämmplatten 1 selbstverständlich im Herstellwerk nur teilweise oder nicht mit ersten Füllelementen versehen sein. In diesem Fall würde der zweite Verfahrensschritt darin bestehen, in Teilflächen der Wärmedämmplatten Füllelemente 2 einzusetzen.

Im nachfolgenden dritten Verfahrensschritt, welcher in Fig. 7 dargestellt ist, werden Leitungen 3 in die Ausnehmungen 15 eingelegt. Die Leitungen 3 weisen eine zur Ausnehmung 15 komplementäre Form auf, so dass die Leitungen 3 durch einfaches Eindrücken werkzeuglos an der Fassade montiert werden können. In gleicher Weise werden Leitungen 4 mit geringerem Querschnitt in den Ausnehmungen 25 installiert. Auch diese Leitungen können durch Eindrücken montiert und durch Formschluss im elastischen Material der Wärmedämmplatten 1 gehalten werden. Die Spalte 17 ermöglichen dabei, Leitungen sowohl horizontal als auch vertikal zu führen.

In gleicher Weise können zweite Füllelemente in die zweiten Ausnehmungen eingesetzt werden, um den Querschnitt weiter zu reduzieren und Leitungen mit noch geringerem Querschnitt in den dritten Ausnehmungen der zweiten Füllelemente zu installieren. Optional können dritte Füllelemente ohne Ausnehmung eingesetzt werden, um Kältebrücken zu vermeiden.

Wie in Figur 8 dargestellt, kann nach Abschluss der Leitungsmontage die Wärmedämmplatte in einem vierten Verfahrensschritt mit einer Abdeckplatte 5 abgedeckt werden. Auch die Abdeckplatte 5 kann durch Klebung auf der Vorderseite 11 der Wärmedämmplatte 1 befestigt werden. Die Abdeckplatte 5 kann die Wärmedämmung der Fassade ermöglichen, eine wind- und wetterfeste Außenschale des Gebäudes bereitstellen oder eine dekorative Außenfläche bereitstellen, um dem Gebäude ein attraktives Erscheinungsbild zu geben.

Auf die Oberfläche der Abdeckplatten 5 kann fakultativ ein Farbanstrich oder ein Putz aufgebracht werden.

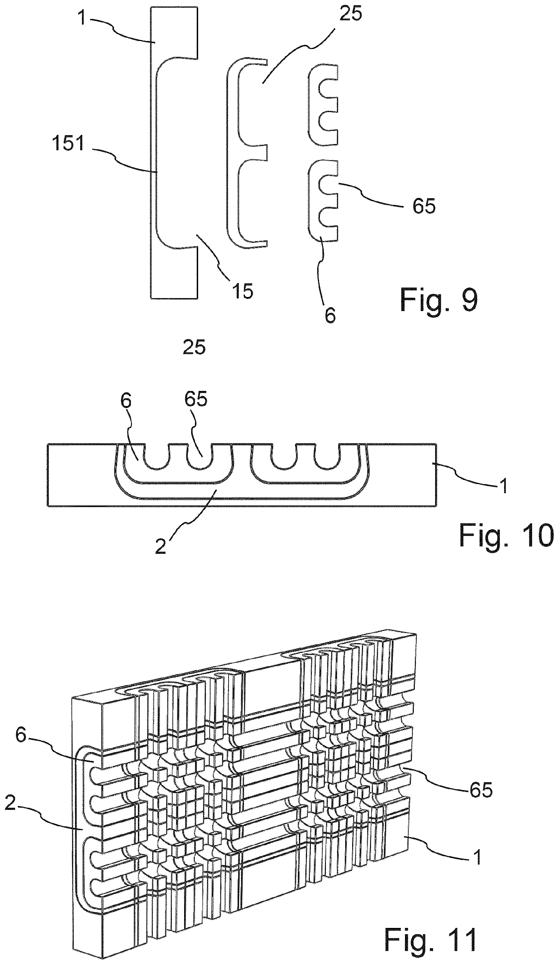

Fig. 9 zeigt den Querschnitt durch eine zweite Ausführungsform einer Wärmedämmplatte, eine dritte Ausführungsform eines ersten Füllelementes und eine Ausführungsform eines zweiten Füllelementes. Gleiche Teile sind mit gleichen Bezugszeichen versehen, sc dass sich die nachfolgende Beschreibung auf die wesentlichen Unterschiede beschränkt.

Wie aus Figur 9 ersichtlich ist, ist die erste Ausnehmung 15 der Wärmedämmplatte 1 dazu eingerichtet, eine Leitung mit großem Querschnitt aufzunehmen, beispielsweise eine Sammelleitung für Frisch- oder Abluft. Das erste Füllelement 2 gemäß der dritten Ausführungsform kann wie vorstehend beschrieben in der ersten Ausnehmung 15 befestigt werden und weist zwei Ausnehmungen 25 mit geringerem Querschnitt auf. Die zweiten Ausnehmungen 25 können beispielsweise für die Verlegung eines Leerrohres zur Aufnahme einer Elektro-Stammleitung oder einer Nebenleitung für Frisch- oder Abluft verwendet werden. Weiterhin können dritte Füllelemente 6 vorgesehen sein, welche in die zweite Ausnehmung 25 passen und selbst dritte Ausnehmungen 65 bereitstellen, beispielsweise für Heizung- oder Wasser- oder Leerrohre einer Elektroinstallation.

Fig. 10 zeigt den Querschnitt durch eine zweite Ausführungsform einer Wärmedämmplatte 1, welche mit ersten und zweiten Füllelementen 2 und 6 ausgestattet ist. Aus Figur 3 ist ersichtlich, wie eine vollständig mit Füllelementen bestückte Wärmedämmplatte vier dritte Ausnehmungen 65 bereitstellt, so dass statt einer großen Leitung vier kleinere Leitungen in die Ausnehmung 15 aufgenommen werden können.

Fig. 11 zeigt eine Wärmedämmplatte 1 gemäß der zweiten Ausführungsform, welche mit ersten und zweiten Füllelementen ausgestattet ist. Als Ergänzung des Querschnittes gemäß Figur 10 zeigt Figur 11 nochmals eine perspektivische Darstellung der Wärmedämmplatte 1. Die Beschränkung auf die Darstellung nur eines einzigen Füllelementes dient dabei lediglich der klareren Darstellung. Selbstverständlich kann auch in dieser Ausführungsform im Füllelement zumindest eine weitere Ausnehmung vorhanden sein, welche wiederum in gleicher Weise mit einem weitern Füllelement versehen ist. Gleich Bezugszeichen bezeichnen gleiche Teile, so dass sich die nachfolgende Beschreibung auf die Wesentlichen Unterschiede beschränkt.

Fig. 12 zeigt den Querschnitt durch eine Wärmedämmplatte 1 gemäß einer erfindungsgemäßen Ausführungsform, welche mit ersten Füllelementen ausgestattet ist. Die Beschränkung auf die Darstellung nur eines einzigen Füllelementes dient dabei lediglich der klareren Darstellung. Selbstverständlich kann auch in dieser Ausführungsform der Erfindung im Füllelement zumindest eine weitere Ausnehmung vorhanden sein, welche wiederum in gleicher Weise mit einem weitern Füllelement versehen ist. Gleich Bezugszeichen bezeichnen gleiche Teile der Erfindung, so dass sich die nachfolgende Beschreibung auf die wesentlichen Unterschiede beschränkt.

Wie in Figur 12 dargestellt ist, ist das Füllelement 2 bei der Herstellung der Wärmedämmplatte 1 aus dem Material der Wärmedämmplatte 1 hergestellt, wobei in die Wärmedämmplatte 1 zwei Schnitte 30a und 30b eingebracht werden. Die Schnitte können einfach durch einen Heißschneider erzeugt werden, wenn das Material der Wärmedämmplatte 1 einen Hartschaum enthält oder daraus besteht, beispielsweise Polystyrol.

Die Schnitte 30a und 30b sind so geführt, dass diese sich am Grund der Schnitte nicht berühren, sondern dort einen Steg 31 begrenzen, welcher als Sollbruchstelle ausgebildet ist. Wenn keine Leitung in der Wärmedämmplatte 1 montiert werden soll, so kann die Wärmedämmplatte 1 unmittelbar verputzt und/oder farblich gestaltet werden. Dabei verhindert der Steg 31, dass das Füllelement 2 während dem Transport oder der Montage aus der Wärmedämmplatte 1 heraus fällt. Sofern eine Leitungsmontage erforderlich ist, kann das Füllelement 2 leicht aus der Wärmedämmplatte 1 herausgebrochen werden.

Fig. 13 zeigt den Querschnitt durch eine Wärmedämmplatte 1 gemäß einer weiteren erfindungsgemäßen Ausführungsform, welche mit ersten Füllelementen ausgestattet ist. Die Beschränkung auf die Darstellung nur eines einzigen Füllelementes dient dabei lediglich der klareren Darstellung. Selbstverständlich kann auch in dieser Ausführungsform der Erfindung im Füllelement zumindest eine weitere Ausnehmung vorhanden sein, welche wiederum in gleicher Weise mit einem weitern Füllelement versehen ist. Gleich Bezugszeichen bezeichnen gleiche Teile der Erfindung, so dass sich die nachfolgende Beschreibung auf die wesentlichen Unterschiede beschränkt.

Wie in Figur 13 dargestellt ist, ist das Füllelement 2 bei der Herstellung der Wärmedämmplatte 1 aus dem Material der Wärmedämmplatte 1 hergestellt, wobei in die Wärmedämmplatte 1 zwei Schnitte 30a und 30b eingebracht werden. Der zweite Schnitt 30b ist dabei weniger tief und dient primär dazu, die Lage des Steges 32 an der Vorderseite 11 der Wärmedämmplatte 1 sichtbar zu machen. Der erste Schnitt 30a trennt das Füllelement 2 auch an dessen tiefster Stelle vom Material der Wärmedämmplatte 1, so dass der Steg 32 an einer seitlichen Begrenzungskante nahe der Oberfläche ausgebildet ist. Dies erleichtert das Herausbrechen des Füllelementes 2 aus der Wärmedämmplatte 1 auf der Baustelle.

Fig. 14 zeigt den Querschnitt durch eine Wärmedämmplatte 1 gemäß einer weiteren erfindungsgemäßen Ausführungsform, welche mit ersten Füllelementen ausgestattet ist. Die Beschränkung auf die Darstellung nur eines einzigen Füllelementes dient dabei lediglich der klareren Darstellung. Selbstverständlich kann auch in dieser Ausführungsform der Erfindung im Füllelement zumindest eine weitere Ausnehmung vorhanden sein, welche wiederum in gleicher Weise mit einem weitern Füllelement versehen ist. Gleich Bezugszeichen bezeichnen gleiche Teile der Erfindung, so dass sich die nachfolgende Beschreibung auf die wesentlichen Unterschiede beschränkt.

Wie in Figur 14 dargestellt ist, ist das Füllelement 2 bei der Herstellung der Wärmedämmplatte 1 aus dem Material der Wärmedämmplatte 1 hergestellt, wobei in die Wärmedämmplatte 1 ein Schnitt 30 eingebracht wird. Der Schnitt 30 trennt das Füllelement 2 auch an dessen tiefster Stelle und bis nahe unter die Vorderseite 11 vom Material der Wärmedämmplatte 1, so dass der Steg 33 angrenzend an die Vorderseite 11 ausgebildet ist. Dies erleichtert das Herausbrechen des Füllelementes 2 aus der Wärmedämmplatte 1 auf der Baustelle.

In einigen Ausführungsformen der Erfindung kann eine Farbmarkierung 34 als Markierung für Lage der Sollbruchstelle dienen.

In einigen Ausführungsformen der Erfindung kann die Farbmarkierung 34 in unterschiedlichen Farben für unterschiedliche Füllelemente ausgeführt sein. Zugehörige Leitungen können eine entsprechende Farbmarkierung aufweisen, so dass für Leitungen mit einer ersten Farbmarkierung das Herausbrechen an der Wärmedämmplatte 1 ebenfalls an den Farbmarkierungen mit der ersten Farbe erfolgt. Für Leitungen mit einem anderen Querschnitt und einer zweiten Farbmarkierung 34 erfolgt das Herausbrechen an der Wärmedämmplatte 1 ebenfalls an den Farbmarkierungen 34 mit der zweiten Farbe. Hierdurch wird die Gefahr von falschem Herausbrechen verringert und die Montage erleichtert.

Selbstverständlich ist die Erfindung nicht auf die in den Figuren dargestellten Ausführungsformen beschränkt. Die vorstehende Beschreibung ist daher nicht als beschränkend sondern als erläuternd anzusehen. Die nachfolgenden Ansprüche, welche die Erfindung definieren, sind so zu verstehen, dass ein genanntes Merkmal in zumindest einer Ausführungsform der Erfindung vorhanden ist. Dies schließt die Anwesenheit weiterer Merkmale nicht aus. Soweit die Ansprüche und die vorstehende Beschreibung "erste" Und "zweite" Merkmale definieren, so dient diese Bezeichnung der Unterscheidung zweier gleichartiger Merkmale, ohne eine Rangfolge festzulegen.

## Patentansprüche

1. Wärmedämmplatte (1) mit einer Vorderseite (11) und
einer Rückseite (12), wobei auf der Vorderseite (11) zumindest eine erste Ausnehmung (15) ausgeformt ist, in welche eine erste Leitung (3) mit einem ersten Querschnitt aufnehmbar ist,
weiterhin enthaltend
zumindest ein erstes Füllelement (2a, 2b), welches mittels eines Steges (31, 32, 33), welcher als Sollbruchstelle ausgebildet ist, mit der Wärmedämmplatte (1) verbunden ist und in der ersten Ausnehmung (15) befestigt ist, wobei die Außenkontur des ersten Füllelementes (2a, 2b) komplementär zur Innenkontur der ersten Ausnehmung (15) ist, und in dem ersten Füllelement (2a, 2b) eine zweite Ausnehmung (25) ausgeformt ist, in welche eine zweite Leitung (4) mit einem zweiten Querschnitt aufnehmbar ist.

2. Wärmedämmplatte nach Anspruch 1, **dadurch**
**gekennzeichnet, dass** die Wärmedämmplatte weiterhin zumindest ein zweites Füllelement (6) enthält, welches mittels eines Steges (31, 32, 33), welcher als Sollbruchstelle ausgebildet ist, mit dem ersten Füllelement verbunden ist und in der zweiten Ausnehmung (25) befestigt ist, wobei die Außenkontur des zweiten Füllelementes (6) komplementär zur Innenkontur der zweiten Ausnehmung (25) geformt ist und im zweiten Füllelement (6) eine dritte Ausnehmung (65) ausgeformt ist, in welche eine dritte Leitung mit einem dritten Querschnitt aufnehmbar ist.

3. Wärmedämmplatte nach einem der Ansprüche 1 oder 2,
**dadurch gekennzeichnet, dass** die Wärmedämmplatte (1) und/oder ein Füllelement einen Phenolharzschaum und/oder ein Polystyrol enthält oder daraus besteht.

4. Wärmedämmplatte nach einem der Ansprüche 1 bis 3,
**dadurch gekennzeichnet, dass** weiterhin zumindest eine Farbmarkierung an der Oberfläche der Wärmedämmplatte angebracht ist, welche die Lage einer Sollbruchstelle kennzeichnet.

5. Wärmedämmplatte nach einem der Ansprüche 1 bis 4, **dadurch gekennzeichnet, dass** eine Leitung (3, 4) in der zugeordneten Ausnehmung (15, 25) durch Formschluss oder Klemmung festlegbar ist.

6. Wärmedämmplatte nach einem der Ansprüche 1 bis 5, **dadurch gekennzeichnet, dass** das erste Füllelement (2a, 2b) und/oder das zweite Füllelement (6) eine Mehrzahl von Ausnehmungen (15, 25) aufweist, in welche eine Mehrzahl von zweiten Füllelementen (6) oder eine Mehrzahl von dritten Füllelementen oder eine Mehrzahl von Leitungen (3, 4) aufnehmbar sind.

7. Wärmedämmplatte nach einem der Ansprüche 1 bis 6, **dadurch gekennzeichnet, dass** zumindest die Rückseite (12) komplementär zu einer Wand geformt ist, welche zur Montage der Wärmedämmplatte (1) vorgesehen ist.

8. Wärmedämmplatte nach einem der Ansprüche 1 bis 7, weiterhin enthaltend eine Abdeckplatte (5), welche auf der Vorderseite (11) der Wärmedämmplatte (1) angeordnet ist, so dass die erste Leitung (3) und die zweite Leitung (4) in zumindest einem Längsabschnitt vollständig in Dämmmaterial eingebettet werden kann.

9. Verfahren zur Montage von Leitungen, **dadurch gekennzeichnet, dass**
zumindest eine Wärmedämmplatte (1) nach einem der Ansprüche 1 bis 8 mir ihrer Rückseite (12) auf einer Wand befestigt wird;
Einsetzen von zumindest einer zweiten Leitung (4) mit einem zweiten Querschnitt in die zweite Ausnehmung (25) oder
Entfernen von zumindest einem ersten Füllelement (2) aus der ersten Ausnehmung (15) und Einsetzen von zumindest einer ersten Leitung (3) mit einem ersten Querschnitt in die erste Ausnehmung (15).

10. Verfahren nach Anspruch 9, weiterhin enthaltend folgenden Verfahrensschritt: Anbringen einer Abdeckplatte (5) auf der Vorderseite (11) der Wärmedämmplatte (1).

11. Verfahren nach einem der Ansprüche 9 bis 10, **dadurch gekennzeichnet, dass** die Leitung (3, 4) und/oder das Füllelement (2) werkzeuglos durch Eindrücken in der jeweiligen Aussparung (15, 25) befestigt werden.

12. Verfahren nach einem der Ansprüche 9 bis 11, **dadurch gekennzeichnet, dass** die Wärmedämmplatte (1) und/oder die Abdeckplatte (5) durch Verklebung auf der Wand befestigt wird.

13. Verfahren nach einem der Ansprüche 9 bis 12, **dadurch gekennzeichnet, dass** vor dem Einsetzen von zumindest einer zweiten Leitung (4) mit einem zweiten Querschnitt in die zweite Ausnehmung (25) ein zweites Füllelement (6) entfernt wird.

14. Gebäude oder Fahr- oder Flugzeug mit einer Wärmedämmplatte nach einem der Ansprüche 1 bis 8.

15. Satz von Teilen zur Herstellung einer multifunktionellen Fassade, enthaltend zumindest eine Wärmedämmplatte nach einem der Ansprüche 1 bis 8.

## Claims

1. Heat insulating panel (1) having a front side (11) and a rear side (12), at least one first recess (15) being formed on the front side (11), into which recess a first conduit (3) having a first cross-section can be accommodated,
comprising further
at least one first filling element (2a, 2b), which is connected to the heat insulating panel (1) by means of a web (31, 32, 33), which is designed as a predetermined breaking point, and is fastened in the first recess (15), the outer contour of the first filling element (2a, 2b) being complementary to the inner contour of the first recess (15), and a second recess (25) being formed in the first filling element (2a, 2b), in which second recess a second conduit (4) having a second cross-section can be accommodated.

2. Heat insulating panel according to claim 1, **characterized in that** the heat insulating panel further contains at least one second filling element (6) which is connected to the first filling element by means of a web (31, 32, 33), which is designed as a predetermined breaking point, and is fastened in the second recess (25), the outer contour of the second filling element (6) having a shape complementary to the inner contour of the second recess (25) and a third recess (65) being formed in the second filling element (6), in which third recess a third conduit having a third cross-section can be accommodated.

3. Heat insulating panel according to any one of claims 1 or 2, **characterized in that** the heat insulating panel (1) and/or a filling element contains or consists of a phenolic resin foam and/or a polystyrene.

4. Heat insulating panel according to any one of claims 1 to 3, **characterized in that** furthermore at least one color marking is applied to the surface of the heat insulating panel, which marking indicates the position of a predetermined breaking point.

5. Heat insulating panel according to any one of claims 1 to 4, **characterized in that** a conduit (3, 4) can be fixed in the associated recess (15, 25) by interlocking connection or clamping.

6. Heat insulating panel according to any one of the claims 1 to 5, **characterized in that** the first filling element (2a, 2b) and/or the second filling element (6) has a plurality of recesses (15, 25), in which a plurality of second filling elements (6) or a plurality of third filling elements or a plurality of conduits (3, 4) can be accommodated.

7. Heat insulating panel according to any one of claims 1 to 6, **characterized in that** at least the rear side (12) has a shape complementary to a wall provided for mounting the heat insulating panel (1).

8. Heat insulating panel according to any one of claims 1 to 7, further containing a cover plate (5) arranged on the front side (11) of the heat insulating panel (1) so that the first conduit (3) and the second conduit (4) can be completely embedded in insulating material in at least one longitudinal portion.

9. Method for mounting conduits, **characterized in that** at least one heat insulating panel (1) according to any one of claims 1 to 8 is fastened to a wall with its rear side (12);
inserting at least one second conduit (4) having a second cross-section into the second recess (25) or
removing at least one first filling element (2) from the first recess (15) and inserting at least one first conduit (3) having a first cross-section in the first recess (15).

10. Method according to claim 9, further containing the following method step: attaching a cover plate (5) on the front side (11) of the heat insulating panel (1).

11. Method according to any one of claims 9 to 10, **characterized in that** the conduit (3, 4) and/or the filling element (2) are fastened without tools by being pressed into the respective recess (15, 25).

12. Method according to any one of claims 9 to 11, **characterized in that** the heat insulating panel (1) and/or the cover plate (5) is fastened to the wall by bonding.

13. Method according to any one of claims 9 to 12, **characterized in that** a second filling element (6) is removed before inserting at least one second conduit (4) having a second cross-section into the second recess (25).

14. Building or vehicle or aircraft having a heat insulating panel according to any one of claims 1 to 8.

15. Kit of parts for making a multifunctional facade, containing at least one heat insulating panel according to any of claims 1 to 8.

## Revendications

1. Panneau d'isolation thermique (1) ayant une face avant (11) et une face arrière (12), au moins un premier évidement (15) étant formé sur la face avant (11), dans lequel peut être logée une première conduite (3) ayant une première section transversale,
comprenant en outre
au moins un premier élément de remplissage (2a, 2b) qui est relié au panneau d'isolation thermique (1) au moyen d'une barrette (31, 32, 33) réalisée en tant qu'emplacement destiné à la rupture, et qui est fixé dans le premier évidement (15), le contour extérieur du premier élément de remplissage (2a, 2b) étant complémentaire au contour intérieur du premier évidement (15), et un deuxième évidement (25) étant formé dans le premier élément de remplissage (2a, 2b), dans lequel peut être logée une deuxième conduite (4) ayant une deuxième section transversale.

2. Panneau d'isolation thermique selon la revendication 1,
**caractérisé en ce que** le panneau d'isolation thermique comprend en outre au moins un deuxième élément de remplissage (6) qui est relié au premier élément de remplissage au moyen d'une barrette (31, 32, 33) réalisée en tant qu'emplacement destiné à la rupture, et qui est fixé dans le deuxième évidement (25), le contour extérieur du deuxième élément de remplissage (6) étant de forme complémentaire au contour intérieur du deuxième évidement (25), et un troisième évidement (65) étant formé dans le deuxième élément de remplissage (6), dans lequel peut être logée une troisième conduite ayant une troisième section transversale.

3. Panneau d'isolation thermique selon l'une des revendications 1 ou 2,
**caractérisé en ce que** le panneau d'isolation thermique (1) et/ou un élément de remplissage comprend ou est constitué d'une mousse de résine phénolique et/ou d'un polystyrène.

4. Panneau d'isolation thermique selon l'une des revendications 1 à 3, **caractérisé en ce qu'**au moins un marquage de couleur est en outre disposé sur la surface du panneau d'isolation thermique, qui caractérise la position d'un emplacement destiné à la rupture.

5. Panneau d'isolation thermique selon l'une des revendications 1 à 4,
**caractérisé en ce qu'**une conduite (3, 4) peut être immobilisée par coopération de forme ou par serrage dans l'évidement associé (15, 25).

6. Panneau d'isolation thermique selon l'une des revendications 1 à 5,
**caractérisé en ce que** le premier élément de remplissage (2a, 2b) et/ou le deuxième élément de remplissage (6) présente une pluralité d'évidements (15, 25) dans lesquels peuvent être logés une pluralité de deuxièmes éléments de remplissage (6) ou une pluralité de troisièmes éléments de remplissage ou une pluralité de conduites (3, 4).

7. Panneau d'isolation thermique selon l'une des revendications 1 à 6,
**caractérisé en ce qu'**au moins la face arrière (12) est de forme complémentaire à une paroi qui est prévue pour le montage du panneau d'isolation thermique (1).

8. Panneau d'isolation thermique selon l'une des revendications 1 à 7, comprenant en outre une plaque de recouvrement (5) disposée sur la face avant (11) du panneau d'isolation thermique (1), de sorte que la première conduite (3) et la deuxième conduite (4) peuvent être entièrement encastrées dans le matériau isolant sur au moins un tronçon longitudinal.

9. Procédé de montage de conduites,
**caractérisé en ce que**
au moins un panneau d'isolation thermique (1) selon l'une des revendications 1 à 8 est fixé par sa face arrière (12) sur une paroi ;
au moins une deuxième conduite (4) ayant une deuxième section transversale est insérée dans le deuxième évidement (25), ou
au moins un premier élément de remplissage (2) est enlevé hors du premier évidement (15), et au moins une première conduite (3) ayant une première section transversale est insérée dans le premier évidement (15).

10. Procédé selon la revendication 9,
comprenant en outre l'étape de procédé suivante :
mise en place d'une plaque de recouvrement (5) sur la face avant (11) du panneau d'isolation thermique (1).

11. Procédé selon l'une des revendications 9 à 10,
**caractérisé en ce que** la conduite (3, 4) et/ou l'élément de remplissage (2) sont fixés sans outil par enfoncement dans l'évidement respectif (15, 25).

12. Procédé selon l'une des revendications 9 à 11,
**caractérisé en ce que** le panneau d'isolation thermique (1) et/ou la plaque de recouvrement (5) sont fixés par collage sur la paroi.

13. Procédé selon l'une des revendications 9 à 12,
**caractérisé en ce qu'**avant l'insertion d'au moins une deuxième conduite (4) ayant une deuxième section transversale dans le deuxième évidement (25), un deuxième élément de remplissage (6) est enlevé.

14. Bâtiment ou véhicule ou avion comprenant un panneau d'isolation thermique selon l'une des revendications 1 à 8.

15. Ensemble de pièces pour la réalisation d'une façade multifonctionnelle, comprenant au moins un panneau d'isolation thermique selon l'une des revendications 1 à 8.
